# EUROPÄISCHE PATENTSCHRIFT

(11) **EP 2 192 072 B1**
(45) Veröffentlichungstag und Bekanntmachung des Hinweises auf die Patenterteilung: **06.05.2015**
(21) Anmeldenummer: 08020792.1
(22) Anmeldetag: 29.11.2008
(51) Int. Cl.: B65H 59/16, B65H 59/24, D02H 13/24

(54) **Vorrichtung zum Einstellen der Spannung eines Fadens**
Device to set the tension of a thread
Dispositif destiné à régler la tension d'un fil

(43) Veröffentlichungstag der Anmeldung: 02.06.2010
(73) Patentinhaber: Karl Mayer Textilmaschinenfabrik GmbH, 63179 Obertshausen (DE)
(72) Erfinder: Fuhr, Martin, 63486 Bruchköbel (DE); Kohn, Roland, 63322 Rödermark (DE)
(74) Vertreter: Knoblauch, Andreas

(56) Entgegenhaltungen:
- JP-A- 11 325 203
- JP-A- 61 002 676
- US-A- 5 957 402

## Beschreibung

Die Erfindung betrifft eine Vorrichtung zum Einstellen der Spannung eines Fadens mit einem vom Faden zumindest teilweise umschlingbaren Drehkörper, der mit einer als Generator betreibbaren elektrischen Maschine verbunden ist.

Ferner betrifft die Erfindung eine Schäranlage mit einer Schärvorrichtung und einem Gatter, das mehrere derartige Fadenspanner aufweist.

Die Erfindung wird im Folgenden anhand einer Schäranlage beschrieben. Die Vorrichtung zum Einstellen der Spannung eines Fadens ist jedoch in entsprechender Weise auch bei anderen Anwendungen anwendbar.

Zur Herstellung eines Kettbaums werden in einer Schäranlage mehrere Fäden gleichzeitig von jeweils einer Spule abgezogen, wobei die Spulen in einem Gatter angeordnet sind. Diese Fäden werden dann auf eine Schärtrommel aufgewickelt. Dabei sollten die Fäden eine gewisse, vorgegebene Spannung aufweisen. Um diese Spannung einzustellen, ist die Vorrichtung zum Einstellen der Spannung eines Fadens vorgesehen, die im Folgenden auch kurz als "Fadenspanner" bezeichnet wird.

Ein Fadenspanner der eingangs genannten Art ist beispielsweise aus EP 1 870 364 A1 bekannt. Der Drehkörper treibt einen elektrischen Generator an, der wiederum elektrische Energie erzeugt. Der Generator ist mit einem Bremstransistor verbunden, mit der der im Generatorbetrieb entstehende Generatorstrom in Wärme umwandelbar ist. Die Wärme führt zu einer erheblichen Beanspruchung der beteiligten Bauelemente, so dass es wiederholt zu Ausfällen kommen kann, die einer Reparatur bedürfen. Damit verbunden sind relativ hohe Kosten. Eine andere Vorrichtung zum Einstellen der Spannung eines Fadens ist aus DE 43 24 412 A1 bekannt. Hier ist der Drehkörper gleichsinnig zur gemessenen Fadenspannung antreibbar, wobei die Umfangsgeschwindigkeit änderbar ist. Auf diese Weise lassen sich sehr geringe Fadenspannungen erzielen. Allerdings ist zum Antrieb des Drehkörpers eine elektrische Leistung erforderlich, die wiederum Kosten verursacht.

In JP H11-325203 A ist eine Vorrichtung zum Einstellen der Spannung eines Fadens beschrieben, wobei mit Hilfe eines elektrischen Motors eine der Bewegung des Fadens entgegen gerichtete Kraft erzeugt wird. Parallel zum Motor ist eine Schalteinrichtung angeordnet, der wiederum parallel eine Steuereinrichtung geschaltet ist. Spannungsspitzen, die beim Schalten der Schalteinrichtung auftreten, werden in einer Energieversorgungseinrichtung mit einem Kondensator zwischengespeichert und dienen zur Versorgung der Steuereinrichtung.

Aus US 5 957 402 A ist ein Verfahren und eine Vorrichtung zum Reduzieren der Kringelneigung von Fadenlagen bekannt, wobei mit Hilfe eines Walzenpaares eine Spannung in die Fadenlagen eingebracht wird. Dabei ist die Walze mit einem elektrischen Motor antreibbar, der mit einer Antriebseinrichtung verbunden ist. Die Antriebseinrichtung dient zur Steuerung des Motors, wobei der Motor auch generatorisch angetrieben werden kann.

Der Erfindung liegt die Aufgabe zugrunde, eine Vorrichtung zum Einstellen der Spannung eines Fadens anzugeben, die mit geringen Betriebskosten betreibbar ist.

Diese Aufgabe wird bei einer Vorrichtung der eingangs genannten Art dadurch gelöst, dass die Maschine mit einer Energierückspeiseeinrichtung verbunden ist.

Man setzt also die zum Erzeugen der Spannung des Fadens notwendige Bremsenergie nicht in Wärme um, sondern speist diese Bremsenergie zurück in ein Netz oder einen Energiespeicher. Auch wenn diese Rückspeisung in der Praxis nicht vollständig erfolgt, erzielt man doch eine Reihe von Vorteilen. Die rückgespeiste Energie kann zum Antrieb von anderen Maschinen oder Anlagenteilen verwendet werden. Vor allem aber wird die Wärmeerzeugung vermindert, so dass die Temperatur in einer Halle, in der das Gatter aufgestellt ist, ohne aufwändige Klimatisierungsmaßnahmen in einem vertretbaren Bereich gehalten werden kann. In einem Gatter sind vielfach mehrere Hundert Spulen angeordnet. Auch wenn bei jeder Spule nur wenige Watt Bremsleistung entstehen, würde dies bei einer Umwandlung in Wärme doch zu einer deutlichen Temperaturerhöhung führen. Durch die Rückspeisungsmöglichkeit der elektrischen Energie wird diese Temperaturerhöhung vermieden oder zumindest stark herabgesetzt. Darüber hinaus lässt sich durch eine Energierückspeiseeinrichtung eine relativ feinfühlige Regelung der Fadenspannung erreichen, da beispielsweise nur eine sehr geringe Temperaturabhängigkeit der Bremsleistung gegeben ist. Würde man die Bremsenergie in einem elektrischen Widerstand in Wärme umsetzen, dann müsste man die Temperaturabhängigkeit des Widerstandswertes dieses elektrischen Widerstandes mit in die Regelung einbeziehen.

Vorzugsweise weist die Energierückspeiseeinrichtung einen Spannungswandler auf. Der Spannungswandler ist in der Lage, die von der elektrischen Maschine gelieferte Spannung so aufzubereiten, dass sie in ein Netz oder einen Energiespeicher zurückgeführt werden kann. In vielen Fällen reicht dazu eine einfache Spannungserhöhung aus.

Bevorzugterweise weist die Energierückspeiseeinrichtung einen Gleichrichter auf. Die Energierückspeiseeinrichtung erzeugt damit einen Gleichstrom, der beispielsweise in den Zwischenkreis einer Antriebsschaltung für den Antrieb eines Drehfeldmotors eingespeist werden kann, wie er beispielsweise für den Antrieb einer Schärtrommel verwendet wird.

Auch ist von Vorteil, wenn die Energierückspeiseeinrichtung einen Wechselrichter aufweist. In diesem Fall kann die beim Erzeugen der Fadenspannung gewonnene Bremsenergie in ein Wechsel- oder Drehstromnetz zurückgespeist werden.

Hierbei ist besonders bevorzugt, dass der Wechselrichter mehrphasig ausgebildet ist. Wenn er beispielsweise dreiphasig ausgebildet ist, dann kann man nach einer entsprechenden Aufbereitung die rückgespeiste Bremsenergie unmittelbar zum Antrieb der Schärtrommel oder einer anderen Komponente einer Schäranlage verwenden.

Vorzugsweise ist die elektrische Maschine auch motorisch betreibbar. Damit kann man den Faden unter Verwendung der elektrischen Maschine von der Spule abziehen. Damit ergeben sich weitere Regelungsmöglichkeiten.

Vorzugsweise ist die Energierückspeiseeinrichtung als Vier-Quadranten-Steller ausgebildet. Die Energierückspeiseeinrichtung ist damit in der Lage, die Maschine sowohl generatorisch als auch motorisch zu betreiben. Sie ist auch in der Lage, antreibend und bremsend zu wirken, also mit positiven oder negativen Spannungen auf die elektrische Maschine einzuwirken.

Vorzugsweise ist ein Bus-Eingang vorgesehen. Ein Bus-Eingang, an den beispielsweise ein CAN-Bus angeschlossen werden kann, erleichtert die Kommunikation der einzelnen Fadenspanner mit einer übergeordneten Steuereinrichtung, die beispielsweise den Bedarf der Fäden ermittelt, die beim Schären auf die Schärtrommel aufgezogen werden sollen. Über den Bus-Eingang lässt sich auch eine Steuerung der Energierückspeiseeinrichtung bewirken, so dass die Energierückspeiseeinrichtung "weiß", auf welches Spannungsniveau sie die beim Bremsen anfallende Energie anheben muss, um sie in ein Netz, einen Zwischenkreis oder einen Energiespeicher rückführen zu können.

Die Aufgabe wird mit einer Schäranlage der eingangs genannten Art gelöst, bei der die Energierückspeiseeinrichtung mit einer Energieversorgungseinrichtung der Schärvorrichtung verbunden ist. Die beim Erzeugen der Spannung der Fäden anfallende Bremsenergie kann dann zum größten Teil verwendet werden, um die Schärtrommel oder andere Elemente der Schärvorrichtung anzutreiben, Dies setzt den Energieverbrauch der Schärvorrichtung herab und senkt damit die Betriebskosten.

Vorzugsweise ist der Bus-Eingang der Energierückspeiseeinrichtung mit einer zentralen Steuereinrichtung verbunden, die auch die Schärvorrichtung steuert. Wie oben erwähnt, lässt sich auf diese Weise über einen Bus, beispielsweise den CAN-Bus, die notwendige Information an die Energierückspeiseeinrichtung übertragen, anhand derer die Energierückspeiseeinrichtung so betrieben werden kann, dass eine Rückspeisung der beim Erzeugen der Fadenspannung anfallenden Bremsenergie in ein übergeordnetes Netz, eine Energieversorgungseinrichtung, einen Zwischenkreis oder einen Energiespeicher möglich ist.

Die Erfindung wird im Folgenden anhand von bevorzugten Ausführungsbeispielen in Verbindung mit der Zeichnung beschrieben. Hierin zeigen:

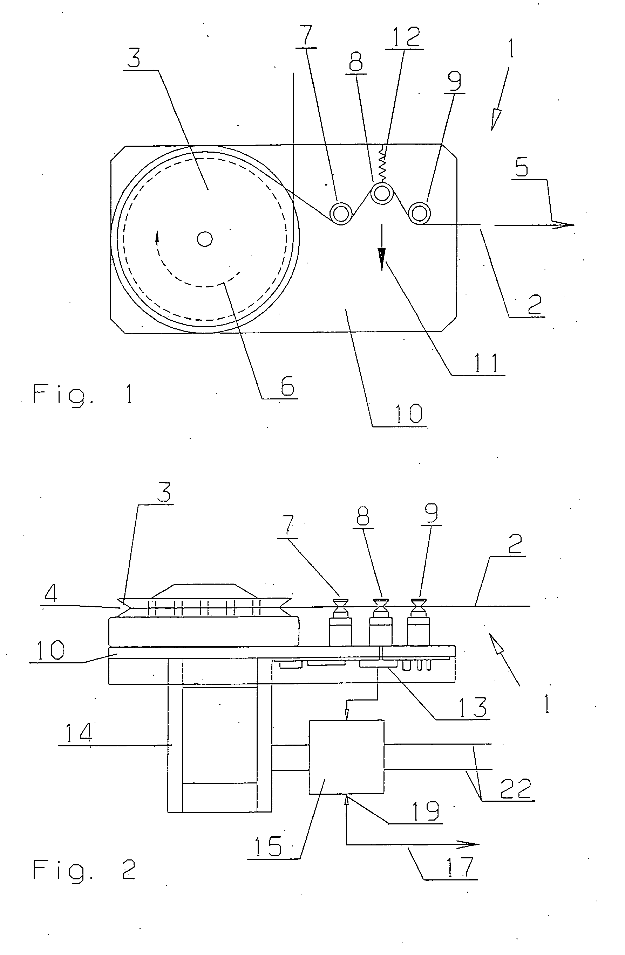

- Fig. 1: eine Draufsicht auf eine Vorrichtung zum Einstellen der Spannung eines Fadens,
- Fig. 2: eine Seitenansicht der Vorrichtung und
- Fig. 3: eine schematische Darstellung von Elementen eines Gatters.

Eine Vorrichtung 1 zum Einstellen der Spannung eines Fadens 2 weist einen Drehkörper 3 auf, der eine V-förmige Umfangsnut 4 aufweist, in die der Faden 2 eingelegt ist. Wenn der Faden in Richtung eines Pfeiles 5 abgezogen wird, dann dreht sich der Drehkörper in Richtung eines Pfeiles 6.

Der Faden 2 ist über drei Umlenkrollen 7-9 geführt. Die beiden äußeren Umlenkrollen 7, 9 sind ortsfest auf einer Basis 10 angeordnet. Die mittlere Umlenkrolle 8 ist unter der Spannung des Fadens 2 aus der dargestellten Ruheposition in Richtung eines Pfeiles 11 verlagerbar. Und zwar gegen die Kraft einer Feder 12. Die Position der Umlenkrolle 8 gegenüber dem Träger 10 erlaubt also eine Aussage über die Spannung des Fadens 2.

Die Position der Umlenkrolle 8 gegenüber dem Träger 10 wird durch einen Sensor 13 ermittelt, der dementsprechend einen Fadenspannungssensor bildet.

Der Drehkörper 3 ist verbunden mit einer elektrischen Maschine 14, die sowohl generatorisch als auch motorisch betreibbar ist. Die elektrische Maschine 14 kann also den Drehkörper 3 antreiben, wenn sie als Motor betrieben wird. Umgekehrt kann der Drehkörper 3, der vom Faden 2 angetrieben wird, die elektrische Maschine 14 antreiben, wenn sie als Generator betrieben wird. Der generatorische Betrieb ist im normalen Einsatz der Häufigste.

Die Maschine 14 ist mit einer Energierückspeiseeinrichtung 15 verbunden. Die Energierückspeiseeinrichtung 15 empfängt elektrische Leistung in Form von Strom und Spannung von der elektrischen Maschine 14.

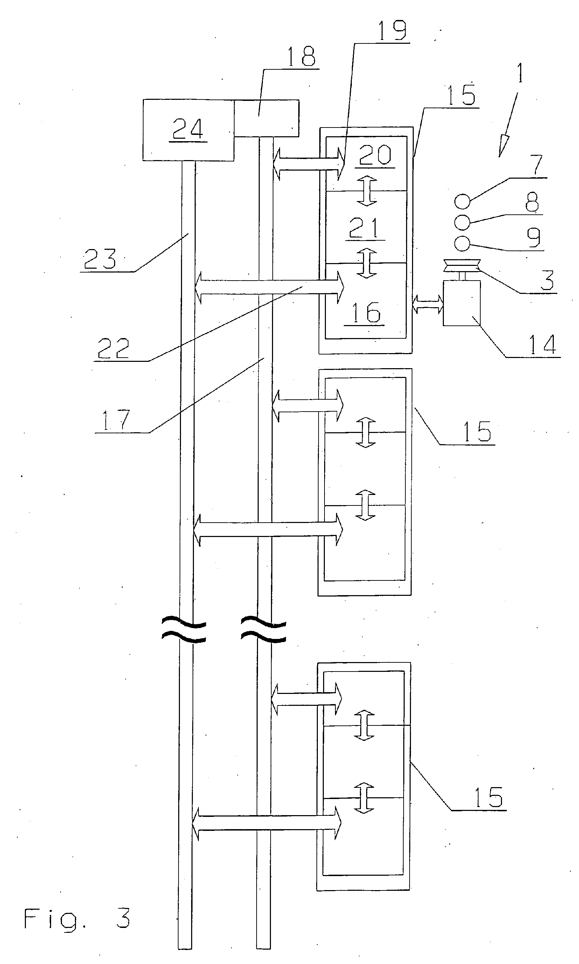

Die Energierückspeiseeinrichtung weist (Fig. 3) einen 4-Quadranten-Steller 16 auf, also eine 4-Quadrant-Antriebs-Brems-Einheit. Zum Erzeugen der Spannung des Fadens 2 muss der Drehkörper 3 gebremst werden. Dabei erzeugt die Maschine 14 elektrische Energie, die von der Energierückspeiseeinrichtung 15 entsprechend aufbereitet und elektrisch in ein Versorgungsnetz, beispielsweise ein dreiphasiges Drehstromnetz, oder in den Zwischenkreis eines Hauptantriebs einer nicht näher dargestellten Schärvorrichtung zurückgespeist wird. Die Menge der zurückgespeisten Energie richtet sich danach, welche Bremsleistung die elektrische Maschine 14 erzeugen muss.

Wie aus Fig. 3 hervorgeht, sind mehrere Vorrichtungen 1 vorgesehen, beispielsweise an einem Gatter, das 8-24 Spulen aufweist, wenn es sich um ein Drehgatter an einer Musterkettenschärmaschine handelt, oder 100 oder mehr Spulen, wenn es sich um ein Gatter einer Konusschärmaschine handelt. Die Vorrichtungen 1 sind über einen gemeinsamen Bus 17 mit einer Steuereinrichtung 18 verbunden. Hierzu weist jede Energierückspeiseeinrichtung 15 einen Bus-Eingang 19 auf. Bei dem Bus 17 kann es sich beispielsweise um einen CAN-Bus handeln. Über den Bus 17 lassen sich beispielsweise Sollwertvorgaben für die Spannung der Fäden 2 von der Steuereinrichtung 18 an die Vorrichtungen 1 übermitteln. Dementsprechend weist jede Energierückspeiseeinrichtung eine Kommunikationsschnittstelle 20 auf.

Der Sensor 13 ist mit einem Regler 21 in der Energierückspeiseeinrichtung 15 verbunden. Der Regler 21 stellt den 4-Quadranten-Steller 16 so, dass die notwendige Bremskraft durch die elektrische Maschine 14 aufgebracht wird. Wenn es erforderlich sein sollte, dann kann die elektrische Maschine 14 auch motorisch betrieben werden, wenn sich beispielsweise ein erhöhter Abzugswiderstand an einer Spule ergibt. Der 4-Quadranten-Steller 16 ist über eine Leitung 22 mit einer Sammelleitung 23 verbunden, die wiederum mit einer Energieaufnahmeeinrichtung 24 verbunden ist. Bei der Energieaufnahmeeinrichtung 24 kann es sich um ein dreiphasiges Drehstromnetz, also das Versorgungsnetz für die gesamte Anlage handeln. Es kann sich um den Gleichstrom-Zwischenkreis eines Hauptantriebs der Schärtrommel oder eines anderen Antriebs handeln. Es kann sich auch um einen elektrischen Energiespeicher handeln, beispielsweise eine entsprechend groß dimensionierte Batterie.

Wenn es sich um einen Gleichstrom-Zwischenkreis handelt, dann reicht es aus, wenn die Energierückspeiseeinrichtung 15 einen Gleichrichter aufweist. Wenn es sich bei der Energieaufnahmeeinrichtung 24 um das Versorgungsnetz handelt, dann weist die Energierückspeiseeinrichtung 15 einen entsprechend mehrphasig ausgebildeten Wechselrichter auf, der dem Gleichrichter nachgeschaltet sein kann.

Über den Bus 17 können die einzelnen Vorrichtungen 1 einzeln kalibriert werden. Die Kalibrierung kann im eingebauten Zustand automatisiert und beliebig oft wiederholt werden.

Man kann die Vorrichtung 1 auch zur Fadenbrucherkennung verwenden. Sobald die elektrische Maschine 14 keine elektrische Energie mehr liefert, wird sie vom Faden 2 nicht mehr angetrieben, was ein leicht erfassbarer Zustand ist.

## Patentansprüche

1. Vorrichtung (1) zum Einstellen der Spannung eines Fadens (2) mit einem vom Faden (2) zumindest teilweise umschlingbaren Drehkörper (3), der mit einer als Generator betreibbaren elektrischen Maschine 14 verbunden ist, **dadurch gekennzeichnet, dass** die Maschine (14) mit einer Energierückspeiseeinrichtung (15) verbunden ist, die eine Bremsenergie in ein Netz oder einen Energiespeicher einspeist.

2. Vorrichtung nach Anspruch 1, **dadurch gekennzeichnet, dass** die Energierückspeiseeinrichtung (15) einen Spannungswandler aufweist.

3. Vorrichtung nach Anspruch 1 oder 2, **dadurch gekennzeichnet, dass** die Energierückspeiseeinrichtung (15) einen Gleichrichter aufweist.

4. Vorrichtung nach einem der Ansprüche 1 bis 3, **dadurch gekennzeichnet, dass** die Energierückspeiseeinrichtung (15) einen Wechselrichter aufweist.

5. Vorrichtung nach Anspruch 4, **dadurch gekennzeichnet, dass** der Wechselrichter mehrphasig ausgebildet ist.

6. Vorrichtung nach einem der Ansprüche 1 bis 4, **dadurch gekennzeichnet, dass** die elektrische Maschine (14) auch motorisch betreibbar ist.

7. Vorrichtung nach Anspruch 6, **dadurch gekennzeichnet, dass** die Energierückspeiseeinrichtung (15) als 4-Quadranten-Steller ausgebildet ist.

8. Vorrichtung nach einem der Ansprüche 1 bis 7, **dadurch gekennzeichnet, dass** ein Bus-Eingang (19) vorgesehen ist.

9. Schäranlage mit einer Schärvorrichtung und einem Gatter, das mehrere Fadenspanner nach einem der Ansprüche 1 bis 8 aufweist, wobei die Energierückspeiseeinrichtung (15) mit einer Energieversorgungseinrichtung (24) der Schärvorrichtung verbunden ist.

10. Schäranlage nach Anspruch 9, **dadurch gekennzeichnet, dass** der Bus-Eingang (19) der Energierückspeiseeinrichtung (15) mit einer zentralen Steuereinrichtung (18) verbunden ist, die auch die Schärvorrichtung steuert.

## Claims

1. Device (1) for setting the tension of a thread (2), said device comprising a rotary body (3) around which the thread can loop at least in part, and which is connected to an electric machine (14) which can be operated as a generator, **characterised in that** the machine (14) is connected to an energy-recovery means (15) which feeds braking energy into a grid or an energy accumulator.

2. Device according to claim 1, **characterised in that** the energy-recovery means (15) comprises a voltage transformer.

3. Device according to either claim 1 or claim 2, **characterised in that** the energy-recovery means (15) comprises a rectifier.

4. Device according to any of claims 1 to 3, **characterised in that** the energy-recovery means (15) comprises an inverter.

5. Device according to claim 4, **characterised in that** the inverter is formed as a multiphase inverter.

6. Device according to any of claims 1 to 4, **characterised in that** the electric machine (14) can also be motor-driven.

7. Device according to claim 6, **characterised in that** the energy-recovery means (15) is formed as a 4-quadrant regulator.

8. Device according to any of claims 1 to 7, **characterised in that** a bus input (19) is provided.

9. Warping machine comprising a warping device and a creel comprising a plurality of thread tensioners according to any of claims 1 to 8, wherein the energy-recovery means (15) is connected to an energy-supply means (24) of the warping device.

10. Warping machine according to claim 9, **characterised in that** the bus input (19) of the energy-recovery means (15) is connected to a central controller (18) which also controls the warping device.

## Revendications

1. Dispositif (1) pour régler la tension d'un fil (2) avec un corps rotatif (3) autour duquel le fil (2) peut être enroulé au moins partiellement et qui est relié à une machine électrique (14) pouvant fonctionner comme génératrice, **caractérisé en ce que** la machine (14) est reliée à un dispositif de réintroduction d'énergie (15) qui introduit une énergie de freinage dans un réseau ou dans un accumulateur d'énergie.

2. Dispositif selon la revendication 1, **caractérisé en ce que** le dispositif de réintroduction d'énergie (15) comporte un convertisseur de tension.

3. Dispositif selon la revendication 1 ou 2, **caractérisé en ce que** le dispositif de réintroduction d'énergie (15) comporte un redresseur.

4. Dispositif selon l'une des revendications 1 à 3, **caractérisé en ce que** le dispositif de réintroduction d'énergie (15) comporte un onduleur.

5. Dispositif selon la revendication 4, **caractérisé en ce que** l'onduleur est conçu polyphasé.

6. Dispositif selon l'une des revendications 1 à 4, **caractérisé en ce que** la machine électrique (14) peut aussi être alimentée par un moteur.

7. Dispositif selon la revendication 6, **caractérisé en ce que** le dispositif de réintroduction d'énergie (15) est conçu comme un convertisseur à quatre quadrants.

8. Dispositif selon l'une des revendications 1 à 7, **caractérisé en ce qu'**une entrée de bus (19) est prévue.

9. Ourdissoir avec un dispositif d'ourdissage et avec un râtelier qui comporte plusieurs tendeurs de fil selon l'une des revendications 1 à 8, le dispositif de réintroduction d'énergie (15) étant relié à un dispositif d'alimentation en énergie (24) du dispositif d'ourdissage.

10. Ourdissoir selon la revendication 9, **caractérisé en ce que** l'entrée de bus (19) du dispositif de réintroduction d'énergie (15) est reliée à un dispositif de commande central (18) qui commande aussi le dispositif d'ourdissage.
